Europäisches Patentamt

**European Patent Office**

Office européen des brevets

(19)

(11) Publication number: **0 200 238**
**B1**

(12) # EUROPEAN PATENT SPECIFICATION

(45) Date of publication of the patent specification:
**12.07.89**

(51) Int. Cl.⁴: **G02B 6/34**

(21) Application number: **86200423.1**

(22) Date of filing: **18.03.86**

(54) Optical multiplexer device.

(30) Priority: **20.03.85 NL 8500806**

(43) Date of publication of application:
**10.12.86 Bulletin 86/45**

(45) Publication of the grant of the patent:
**12.07.89 Bulletin 89/28**

(84) Designated Contracting States:
**DE FR GB IT SE**

(56) References cited:
**EP-A- 0 074 152**
**EP-A- 0 123 237**

(73) Proprietor: **NKF KABEL B.V., Noordkade 64, NL-2741 EZ Waddinxveen(NL)**

(72) Inventor: **Schultheiss, Nicolaas Gerhard, c/o INT. OCTROOIBUREAU B.V. Prof.Holstlaan 6, NL-5656 AA Eindhoven(NL)**

(74) Representative: **Plaisier, Aart et al, Nederlandsch Octrooibureau Scheveningseweg 82 P.O. Box 29720, NL-2502 LS 's-Gravenhage(NL)**

ACTORUM AG

## Description

The invention relates to an optical multiplexer device which includes a plurality of optical fibres, one end face of each optical fibre being arranged in a common plane, which plurality includes a first optical fibre for conducting several light signals of different wavelength and at least two second optical fibres, each of which serves to conduct a light signal in a given waveband, a wavelength-selective element and a lens system which is arranged between the wavelength-selective element on the one side and the common plane on the other side, the arrangement being such that a low-attenuation transmission path which is dependent of the wavelength of the light is formed between the first optical fibre and each of the second optical fibres. The optical multiplexer device may be a multiplexer as well as a demultiplexer. In the former case, the second optical fibres serve for the input signals whilst the first optical fibre serves for the output signal. In the latter case the first optical fibre constitutes the input fibre whilst the second optical fibres constitute output fibres. A device of the kind set forth is known from EP-A 74 152).

The construction of the known device is comparatively complex; this is inter alia due to the fact that therein the orientation of the wavelength-selective element with respect to the incident light beam is adjustable. In many cases, however, it is sufficient to adjust the device properly during assembly; adjustability during operation is then no longer necessary. In such cases it is notably important that the cost price of the device is as low as possible.

Therefore, it is an object of the invention to provide a device of the kind set forth which can be constructed while using only a very small number of components and which can be comparatively simply adjusted during assembly. To achieve this, the device in accordance with the invention is characterized in that the lens system includes a plane parallel, transparent plate, a first main surface of which is arranged against the end faces of the optical fibres arranged in the common plane, and also includes a plano-spherical lens whose plane surface is arranged against the second main surface.

The thickness of the transparent plate determines the distance between the lens and the end faces of the fibres. This thickness can be preselected so that the focal point of the lens is situated in the common plane and the focal distance of the lens need not be adjusted. The direction of the light beams emerging from the lens can be simply adjusted during assembly by displacing the lens across the plate. When the correct position is reached, the lens can be secured in that position by means of a suitable adhesive.

In a preferred embodiment of the device in accordance with the invention, it is particularly simple to secure the transparent plate against the end faces of the fibres and to mount the wavelength-selective element, because the common plane in which the end faces of the optical fibres are situated coincides with an end face of a fibre holder in which the end portions of the fibres are retained, the first main surface of the transparent plate bearing against said end face, the lens system being accommodated in a wedge-shaped space which is recessed in a housing and which is bounded by a first wedge face which extends parallel to said end face of the fibre holder and by a second wedge face where against the wavelength-selective element is arranged.

The invention will be described in detail hereinafter with reference to the drawing. Therein:

Figure 1 is a longitudinal sectional view of a first embodiment of a multiplexer device,

Figure 2 is a plan view at an increased scale of a detail of the device shown in Figure1,

Figure 3 is a plan view at a reduced scale of another detail of the device shown in Figure 1,

Figures 4A and 4B illustrate the path of the light rays during the adjustment of the lens system of the device shown in Figure 1,

Figure 5 is a longitudinal sectional view of a second embodiment of a multiplexer device,

Figure 6 is a side elevation of a detail of the device shown in Figure 5,

Figure 7 is a cross-sectional view of the detail shown in Figure 6, and

Figure 8 is a cross-sectional view at a reduced scale of the device shown in Figure 5.

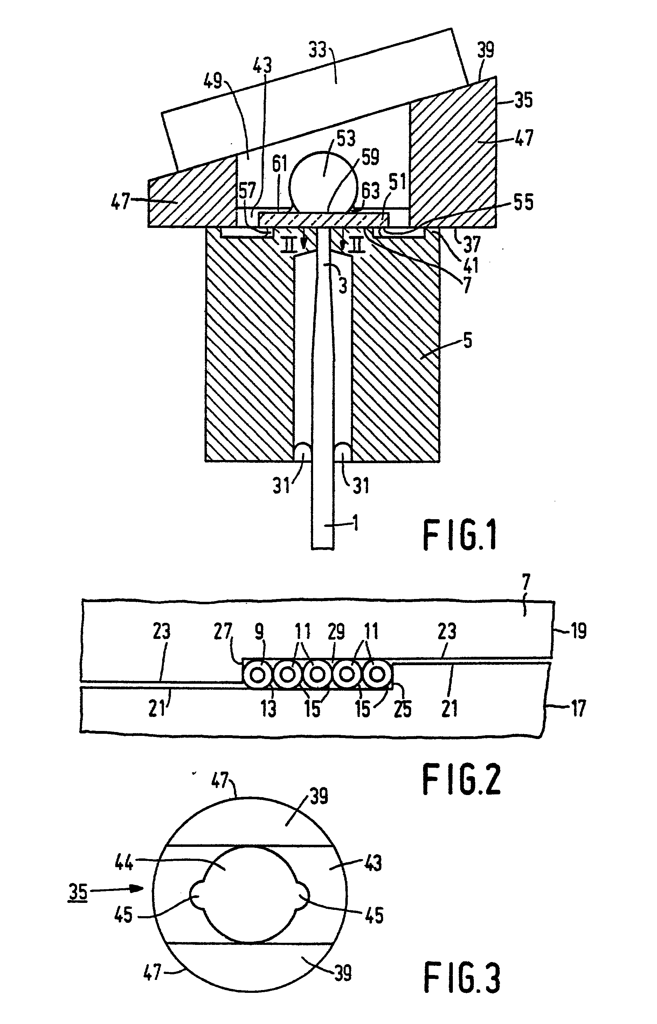

Figure 1 shows a multiplexer device which includes a plurality of optical fibres which are adjacently arranged so as to form a ribbon 1. At the end 3 of the ribbon the protective sheath of the fibres has been removed, so that the width at this end is smaller than that of the remainder of the ribbon. The end portions of the fibres are retained in a fibre holder 5 having an end face 7 which coincides with a common plane in which the end faces of the optical fibres are situated. Figure 2 shows a part of the end face 7, together with the end faces 9, 11 of the optical fibres 13, 15. The optical fibres include a first fibre 13 for conducting various light signals of different wavelength, and four second optical fibres 15, each of which serves to conduct a light signal in a given waveband.

The fibre holder 5 of the embodiment shown consists of two portions 17 and 19, each of which has a mainly plane side 21, 23, respectively, said sides being arranged one against the other. In each side 21 and 23 there is provided a step 25 and 27, respectively, so that between the portions 17 and 19 there is formed a rectangular space 29 in which the end portions of the optical fibres 13, 15 are retained. The end portions of all optical fibres 13, 15 have the same diameter and the two portions 17, 19 of the fibre holder 5 are arranged one against the other in such a manner that the width of the rectangular space 29 is equal to this diameter and its length is equal to the diameter multiplied by the number of fibres, so in this embodiment it equals five times the diameter. During the clamping of the end portions of the fibres 13, 15 the space 29 is filled with an adhesive which has not yet set, for example an epoxy glue. After the setting of the adhesive the two portions 17, 19 and the fibres 13, 15 form a rigid assembly which can be polished so that the end faces 9, 11 and the end face 7 are situated in a common plane. For strain-relief of the glued joint thus formed, the ribbon 1 formed by the further portions of the optical fibres can be secured to the fibre holder 5 by means of a further glued joint 31 (see Figure 1).

Opposite the end face 7 of the fibre holder 5 there is arranged a wavelength-selective element 33 in the form of a reflection grating. The wavelength-selective element is secured on a wedge-shaped housing 35. The housing 35 includes two wedge faces, the first wedge face 37 bearing against the holder 5 whilst the wavelength-selective element 33 is secured against the second wedge face 39, for example by means of a suitable glue such as a cyano-acrylate glue. The first wedge face 37 bears on an edge 41 which is formed on the fibre holder 5 and which encloses the end face 7, so that the first wedge face extends parallel to the end face. The angle enclosed by the two wedge faces 37, 39 (the wedge angle) then determines the angle between the axes of the optical fibres 13, 15 on the one side and the plane of the grating 33 on the other side.

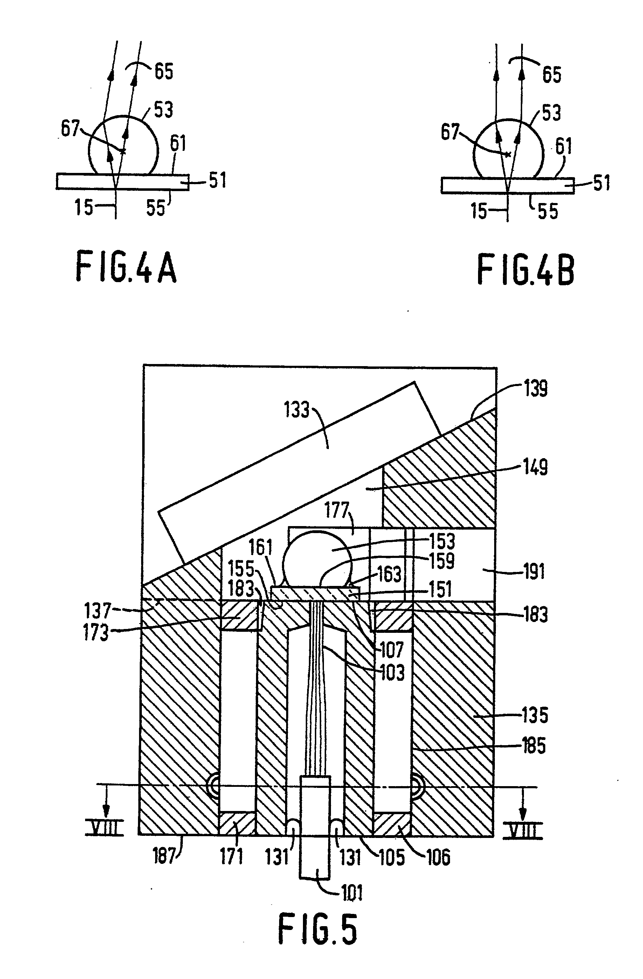

Figure 3 is a plan view at a reduced scale of the housing 35. The housing includes an annular base portion 43 which is provided with a central aperture 44 for accommodating the end face 7. In the base portion there are formed two semicircular recesses 45 which adjoin the central aperture 44 and which serve to accommodate screws (not shown) for securing the housing 35 to the fibre holder 5. Some clearance exists between the screws and the recesses 45 so that, prior to the tightening of the screws, the housing can still be shifted slightly for exact adjustment of the grating 33 with respect to the end faces 9, 11 of the fibres 13, 15. On both sides of the central aperture 44 there are provided two ridges 47, the upper faces of which define the second wedge face 39.

Between the two ridges 47 there is formed a wedge-shaped space 49 which is bounded by the two wedge faces 37, 39 (see Figure 1) and which accommodates a lens system which includes a plane parallel transparent plate 51 (for example, a glass plate) on which a plano-spherical lens 53 (for example, a sapphire lens) is secured. A first main surface 55 of the plate 51 bears against the end face 7 of the fibre holder 5 and against the end faces 9, 11 of the optical fibres 13, 15 which are flush with this end face. The plate 51 is secured to the fibre holder 5 by means of a suitable glue (for example, Norland UV setting lens cement). The glued joint is denoted by the reference numeral 57 in Figure 1. The flat surface 59 of the lens 53 bears against the second main surface 61 of the plate 51 and is secured to the plate by means of a glued joint 63 which may be made of the same type of glue as used for the joint 57.

Before the setting of the glue of the glued joint 63 by irradiation by ultraviolet light, the lens 53 is displaced across the plate 51 until it reaches the correct position. This is illustrated in the Figures 4A and B. These Figures diagrammatically show one of the two optical fibres 15 and the plate 51 and the lens 53. The thickness of the plate 51 has been chosen so that the focal plane of the lens 53 coincides with the first main surface 55 of the plate. Because the end face 11 of the fibre 15 bears against this first main surface, the light emerging from this end face is shaped into a parallel light beam 65 by the lens 53. The centre of the lens 53 is denoted by the reference numeral 67 in the Figures 4A and B. When this centre is not situated on the prolongation of the axis of the fibre 15, the beam 65 encloses an angle with respect to the normal to the plate 51 (see Figure 4A). When the lens 53 is displaced across the second main surface 61 of the plate 51, this angle changes and when the centre 67 is situated on the prolongation of the axis of the optical fibre 15, this angle equals zero, which means that the beam 65 is directed perpendicularly to the plate 51. As is known (for example, see Applied Optics, 16, No. 8, pp 2180-2194, notably the section "Blazed Gratings" on pages 2184 and 2185), the angle at which light is reflected by a grating depends not only on the properties of the grating and the wavelength of the light, but also on the angle of incidence of the light on the grating. Because this angle of incidence can be simply changed in the described manner, the multiplexer device can be so adjusted by shifting the lens 53 that light of a given wavelength (or in a given narrow waveband) from one of the second optical fibres 15 is reflected to the first optical fibre 13 by the grating 33. Because the second optical fibres 15 are adjacently arranged, the distance between the centre 67 of the lens 53 and the prolongation of the axis of each fibre will differ. Consequently the light reflected from each of these fibres to the first optical fibre 13 will form part of a different waveband. A low-attenuation transmission path which depends on the wavelength of the light is thus formed between each of the second optical fibres 15 on the one side and the first optical fibre 13 on the other side. Because the path of the light rays is reversible, these wavelength-dependent paths also exist in the reverse direction, so that the device can be used not only as a muliplexer but also as a demultiplexer. The lens 53 can be displaced across the plate 51 for as long as the glue forming the glued joints 63 (see Figure 1) has not yet set. Once the lens 53 reaches the desired position, the glue is exposed to ultraviolet light, after which the lens will be rigidly secured to the plate 51. The wavebands conducted by the various optical fibres are thus defined.

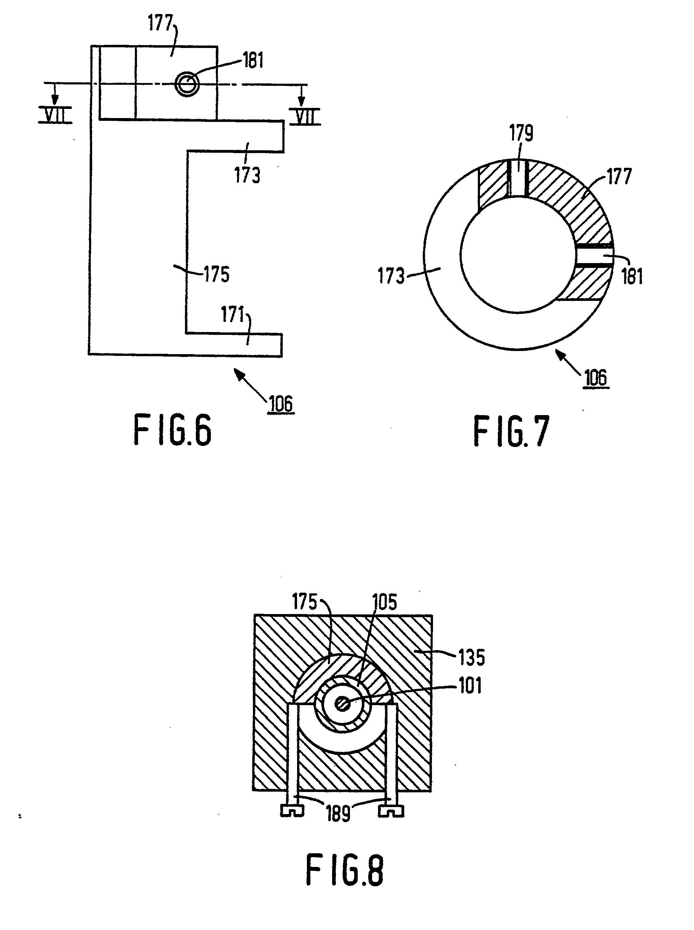

The multiplexer device shown in Figure 5 includes a cable 101 in which a number of optical fibres are arranged in a rather arbitrary manner. The protective envelope has been removed from the free end portions of the fibres which are arranged so as to form a ribbon 103 which is retained in a fibre holder which consists of an inner portion 105 and an outer portion 106. The inner portion 105 itself consists of two portions wherebetween the fibres in the form of a ribbon are retained in the same ways as between the two portions 17, 19 of the fibre holder 5 (see Figures 1 and 2). The inner portion is secured in the outer portion 106 which will now be described in detail with reference to the Figures 6 and 7. Figure 6 is a side elevation of the outer portion 106 (viewed from the left in Figure 5) and Figure 7 is a cross-sectional taken along the line VII-VII in Figure 6. The outer portion 106 includes a lower ring 171 and an upper ring 173 which are interconnected by means of an approximately semi-cylindrical intermediate portion 175. On the upper ring 173 there is arranged an adjusting device 177 in the form of a portion of a cylindrical envelope provided with two threaded apertures 179, 181 which extend perpendicularly to one another in the direction of the cylinder axis.

After the fibre ribbon 103 has been glued into the inner portion 105 of the fibre holder in the manner described with reference to Figure 2 and the cable 101 has also been connected to the inner portion by means of a further glued joint 131, the inner portion is guided from below through the apertures in the rings 171, 173 of the outer portion 106 until its end face 107, in which the end faces of the optical fibres are also situated, coincides with the upper face of the upper ring 173. In order to facilitate the introduction of the inner portion 105 into the rings 171, 173, the upper end portion of the inner portion is constructed so as to be conical so that a clearance remains between this end portion and the upper ring 173; this clearance can be filled with a suitable glue 183 for interconnection of the two portions of the fibre holder.

On the end face 107 there is provided a plane parallel, transparent plate 151, the first main surface 155 of which is arranged against the end face. Against the second main surface 161 of the plate 151 there is arranged the flat surface 159 of a planospherical lens 153. The lens system thus formed corresponds to the lens system described with reference to Figure 1.

The fibre holder 105, 106 is accommodated in a central cavity 185 which is recessed in a housing 135 and which extends from a lower end face 187 of the housing as far as a space 149 which is also recessed in the housing and which is bounded at the lower side by a first wedge face 137 which extends parallel to the end face 107 and which coincides therewith in the present example. The wedge-shaped space 149 is bounded at the upper side by a second wedge face 139 whereagainst there is arranged a wavelength-selective element 133 in the form of a reflection grating.

Figure 8 is a cross-sectional view of the housing 135, taken along the line VIII-VIII in Figure 5, and also shows the cable 101, the inner portion 105 of the fibre holder and the intermediate portion 175 of the outer portion of the fibre holder. Also visible are two adjusting screws 189 which have been screwed into the housing 135 and whose ends bear against the intermediate portion 175 at diametrically situated points. By screwing one adjusting screw 189 further into the housing and by screwing the other adjusting screw further out, the fibre holder 105, 106 can be rotated about its longitudinal axis in order to shift the plane of the ribbon 103 to the desired position with respect to the grating 133. If desired, the fibre holder 105, 106 can subsequently be secured in the housing 135 by means of a suitable glue (not shown), after which the adjusting screws 189 can be removed.

As appears from Figure 5, the lens system 151, 153 which is partly enclosed by the adjusting device 177 is situated in the wedge-shaped space 149. Adjusting screws (not shown) can be screwed into both threaded apertures 179, 181 (see Figure 7), the ends of said screws then pressing against the lens 153 in two mutually perpendicular directions. The adjusting screws are accessible from the outside via apertures 191 in the housing 135, one of said apertures being visible in Figure 5. Using the adjusting screw screwed into the aperture 179, the lens 153 can be positioned exactly over the plane of the ribbon 103, so that the attenuation of the light can be minimized. Using the adjusting screws screwed into the aperture 181, the centre of the lens 153 can be shifted with respect to the axes of the individual fibres of the ribbon 103 in the manner described with reference to the Figures 4A and B. The lens 153 can again be secured on the plate 151 by means of a glue 163 which is made to set after completion of the described adjusting operations. If desired, the adjusting screws may subsequently be removed again.

## Claims

1. An optical multiplexer device which includes a plurality of optical fibres (13, 15), one end face (9, 11) of each optical fibre being arranged in a common plane, which plurality includes a first optical fibre (13) for conducting several light signals of different wavelength and at least two second optical fibres (15), each of which serves to conduct a light signal in a given waveband, a wavelength-selective element (33, 133) and a lens system which is arranged between the wavelength-selective element on the one side and the common plane on the other side, the arrangement being such that a low-attenuation transmission path which is dependent on the wavelength of the light is formed between the first optical fibre (13) and each of the second optical fibres (15), characterized in that the lens system includes a plane parallel, transparent plate (51, 151), a first main surface (55, 155) of which is arranged against the end faces (9, 11) of the optical fibres arranged in the common plane, and also includes a plano-spherical lens (53, 153) whose plane surface (59, 159) is arranged against the second main surface (61, 161).

2. An optical multiplexer device as claimed in Claim 1, characterized in that the common plane in which the end faces (9,11) of the optical fibres (13, 15) are situated coincides with an end face (7, 107) of a fibre holder (5, 105, 106) in which the end portions of the fibres are retained, the first main surface (55, 155) of the transparent plate (51, 151) bearing against said end face, the lens system being accommodated in a wedge-shaped space (49, 149) which is recessed in a housing and which is bounded by a first wedge face (37, 137) which extends parallel to said end face (7, 107) of the fibre holder and by a second wedge face (39, 139) whereagainst the wavelength-selective element (33, 133) is arranged.

3. An optical multiplexer device as claimed in Claim 2, characterized in that in the housing (135) there is also recessed a cavity (185) for accommodating the fibre holder (105, 106), which cavity extends from a housing end face (187), situated opposite the second wedge face (139), as far as the wedge-shaped space (149).

## Revendications

1. Dispositif multiplexeur optique qui comprend une pluralité de fibres optiques (13, 15), une face d'extrémité (9, 11) de chaque fibre optique étant disposée dans un plan commun, laquelle pluralité comprend une première fibre optique (13) pour conduire plusieurs signaux lumineux de longueurs d'onde différentes et au moins deux secondes fibres optiques (15), dont chacune sert à conduire un signal lumineux dans une bande de longueurs d'ondes donnée, un élément sélécteur de longueur d'onde (33, 133) et un système à lentille qui est disposé entre l'élément sélecteur de longueur d'onde sur un côté et le plan commun sur l'autre côté, l'agencement étant tel qu'un parcours de transmission à faible affaiblissement qui est dépendant de la longueur d'onde de la lumière est formé entre la première fibre optique (13) et chacune des secondes fibres optiques (15), caractérisé en ce que le système à lentille comprend une plaque transparente à plans parallèles (51, 151), dont une première surface principale (55, 155) est disposée contre les faces d'extrémité (9, 11) des fibres optiques disposées dans le plan commun, et comprend également une lentille plano-sphérique (53, 153) dont la surface plane (59, 159) est disposée contre la seconde surface principale (61, 161).

2. Dispositif multiplexeur optique selon la revendication 1, caractérisé en ce que le plan commun dans lequel les faces d'extrémité (9, 11) des fibres optiques (13, 15) sont situées coïncide avec une face d'extrémité (7, 107) d'un support de fibres (5, 105, 106) dans lequel sont retenues les portions d'extrémité des fibres, la première surface (55, 155) de la plaque transparente (51, 151) portant contre ladite face d'extrémité, le système à lentille étant logé dans un espace en forme de coin (49, 149) qui est constitué par un évidement dans le boîtier et qui est limité par la première face de coin (37, 137) qui s'étend parallèlement à ladite face d'extrémité (7, 107) du support de fibres et par une seconde face de coin (39, 139) contre laquelle est disposé l'élément sélecteur de longueur d'onde (33, 133).

3. Dispositif multiplexeur optique selon la revendication 2, caractérisé en ce qu'il est également constitué dans le boîtier (135) une cavité (185) pour loger le support de fibres (105, 106), cette cavité s'étendant à partir d'une face d'extrémité (187) du boîtier, située à l'opposé de la seconde face de coin (139), jusqu'à l'espace en forme de coin (149).

## Patentansprüche

1. Optische Multiplexeinrichtung mit einer Vielzahl von optischen Fasern (13, 15), deren Stirnseiten (9, 11) an einem Ende in einer gemeinsamen Ebene angeordnet sind, wobei die Vielzahl von optischen Fasern (13, 15) eine erste optische Faser (13) zur Leitung mehrerer Lichtsignale verschiedener Wellenlänge und wenigstens zwei zweite optische Fasern (15) einschließt, von denen jede zur Leitung eines Lichtsignals in einem vorgegebenen Wellenband dient, mit einem Element (33, 133) zur Auswahl einer Wellenlänge und mit einem Linsensystem, das zwischen dem Element zur Auswahl einer Wellenlänge auf der einen Seite und der gemeinsamen Ebene auf der anderen Seite angeordnet ist, so daß ein von der Wellenlänge des Lichtes abhängiger Übertragungsweg mit einer niedrigen Dämpfung zwischen der ersten optischen Faser (13) und jeder der zweiten optischen Fasern (15) gebildet wird, dadurch gekennzeichnet, daß das Linsensystem eine planparallele, transparente Platte (51, 151), deren eine Hauptoberfläche (55, 155) gegen die in der gemeinsamen Ebene angeordneten Stirnseiten (9, 11) der optischen Fasern angeordnet ist, und eine plansphärische Linse (53, 153) aufweist, deren ebene Oberfläche (59, 159) gegen die zweite Hauptoberfläche (61, 161) der Platte angeordnet ist.

2. Optische Multiplexeinrichtung nach Anspruch 1, dadurch gekennzeichnet, daß die gemeinsame Ebene, in der die Stirnseiten (9, 11) der optischen Fasern (13, 15) angeordnet sind, mit einer Stirnseite (7, 107) eines Faserhalters (5, 105, 106) zusammenfällt, in dem die Endbereiche der Fasern festgehalten sind, wobei die erste Hauptoberfläche (55, 155) der transparenten Platte (51, 151) gegen diese Stirnseite anliegt, und daß das Linsensystem in einem keilförmigen Raum (49, 149) angeordnet ist, der in ein Gehäuse eingelassen ist und durch eine erste, sich parallel zu der Stirnseite (7, 107) des Faserhalters erstreckenden Keilfläche (37, 137) und durch eine zweite Keilfläche (39, 139), gegen die das Element (33, 133) zur Auswahl einer Wellenlänge angeordnet ist, begrenzt ist.

3. Optische Multiplexeinrichtung nach Anspruch 2, dadurch gekennzeichnet, daß in dem Gehäuse (135) ein Hohlraum (185) zur Aufnahme des Faserhalters (105, 106) eingelassen ist, wobei der Hohlraum sich von einer Stirnseite (187) des Gehäuses, die der zweiten Keilfläche (139) gegenüberliegend angeordnet ist, über den keilförmigen Raum (149) hinweg erstreckt.

FIG.1

FIG.2

FIG.3

65

53

67

61

51

15

55

# FIG.4A

65

53

67

61

51

15

55

# FIG.4B

139

133

149

177

161

155

183

153

159

163

151

137

173

191

183

107

103

135

185

187 171 131 131 105 106

101

VIII

VIII

# FIG.5

FIG.6

FIG.7

FIG.8